# EUROPEAN PATENT SPECIFICATION

(11) **EP 3 303 020 B1**
(45) Date of publication and mention of the grant of the patent: **28.08.2019**
(21) Application number: 16734457.1
(22) Date of filing: 01.06.2016
(51) Int. Cl.: B60G 9/00

(54) **MOUNTING OF A RIGID AXLE ON TRAILING ARMS**
MONTAGE EINER STARREN ACHSE AN LÄNGSLENKERN
MONTAGE D'UN ESSIEU RIGIDE SUR DES BRAS D'ARTICULATION

(30) Priority: 04.06.2015 IT UB20151146
(43) Date of publication of application: 11.04.2018
(73) Proprietor: Assali Stefen S.r.l., 37050 Vallese di Oppeano (VR) (IT)
(72) Inventor: BERTAGNOLI, Alberto, 37059 Zevio (Verona) (IT); BERTAGNOLI, Giovanni, 37059 Zevio (Verona) (IT); NICOLINI, Francesco, 37059 Zevio (Verona) (IT)
(74) Representative: Laghi, Alberto
(86) International application number: PCT/IB2016/053207
(87) International publication number: WO 2016/193916

(56) References cited:
- WO-A1-2011/059312
- AU-A1- 2008 202 797
- JP-A- 2006 315 434
- US-A1- 2009 224 503
- US-A1- 2012 200 055
- US-A1- 2013 056 946
- US-A1- 2013 200 588
- US-A1- 2013 270 789
- US-A1- 2015 130 157
- US-B1- 6 241 266
- US-B1- 7 954 833

## Description

The present invention relates to a support assembly for an axle.

In particular, the invention is advantageously used in the field of components for transport vehicles in general, which the following description will make explicit reference without thereby losing in generality, to support both axles or transaxles whose heads are engaged into the wheel hub, to which they transfer the load of the vehicles themselves, by the insertion of elastic suspension devices.

In order to support the axles of a vehicle, it is generally used a support assembly composed of a pair of complex mechanical components. Essentially, these components are composed of arm elements, featuring an axle which is transversely mounted onto the intermediate parts and first ends (also called attachment or front support) pivoted to a portion of the frame or to the chassis of the vehicle and connected to the suspensions.

The second ends of said arms (also called attachment or rear support) are in opposition to the first and are also suitable to support the suspension spring elastic means, connected to the vehicle frame.

Currently, the support assembly for an axle with one of the above-described known structure type is causing important drawbacks.

In fact, the axle is firmly secured to the said intermediate components of the arm elements, for example by keying or equivalent systems and by means of welding spots or welded seams. For this reason, in case of breakdown or maintenance of even only one of the elements of the assembly, it is necessary to disassemble the entire assembly, with long, complex and very expensive operations. Therefore, the object of the present invention is to overcome the problems and drawbacks of the assembly group and prior art mentioned above.

In particular, the purpose of the present invention is to provide a support assembly for an axle that allows the execution of easy and quick maintenance and/or replacement of individual components of the same assembly.

The structural and functional characteristics of the present invention and its advantages over the known art will be clearer and more evident from the claims below, and in particular from an examination of the following description, referring to the attached drawings, which show some preferred but non-limiting embodiments of the present support assembly for axles, wherein:
- Figure 1 is a schematic perspective view of a support assembly according to the present invention;
- Figure 2 is a top plan view of the assembly shown in Figure 1;
- Figure 3 is a partially sectional side view of the assembly shown in Figure 1 and Figure 2;
- Figure 4 shows a perspective view of a component of the assembly shown in figure 1;
- Figure 5 is a side view of the component shown in Figure 4;
- Figure 6 is a top plan view of the component shown in Figure 4 and Figure 5;
- Figure 7 is a schematic side view, with parts removed for clarity purposes, of some components of the assembly shown in Figure 1; and
- Figures 8 and 9 show two respective side views of different variants of the components shown in Figure 7.

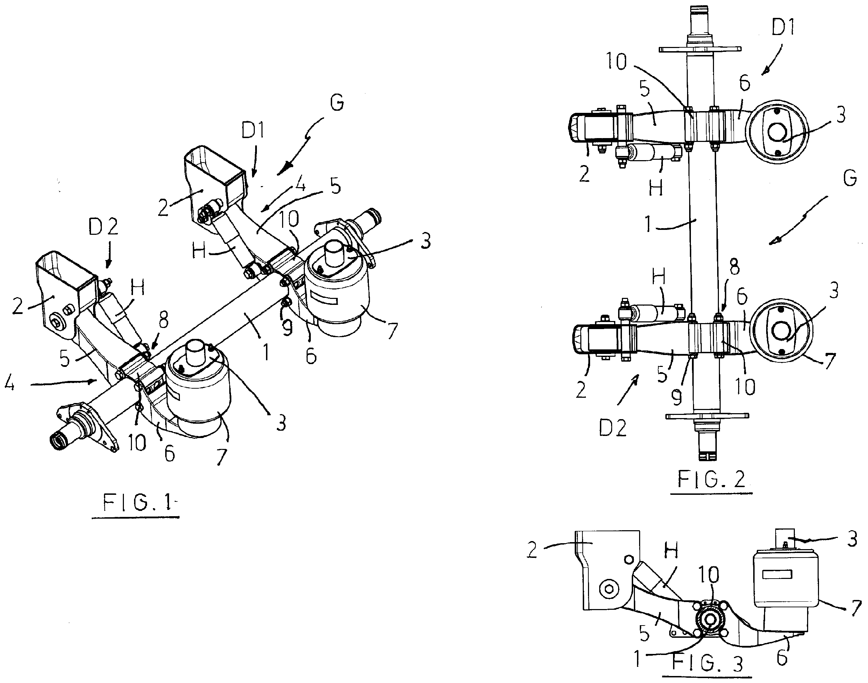

With reference to Figures 1 to 3, G refers to an assembly group for an axle 1 with a circular section.

The assembly G is composed by a pair of identical support devices, D1 and D2, each one adapted to be connected to the frame of a vehicle (known and not illustrated) via a support element 2 or front attachment and a support element 3 or rear attachment, and comprising means 4 with connection arms between elements 2 and 3.

The means 4 with connection arms are composed of a first arm 5, a portion 5' of which end is pivoted to the front attachment 2 via means with deformable bushing means, and of a second arm 6, a portion 6' of which end is adapted to support an air spring suspension 7, or technologically equivalent, which is fixed and acting on said rear attachment element 3.

A suspension H is also expected to be mounted and acting between front attachment element 2 and the first arm 5.

As shown more clearly in Figures 1 to 7, each D1, D2 device of the assembly support G also comprises a connecting element 8 between the arms 5 and 6, fixed by fixing bolts 9 in correspondence with respective shaped side ends 5" and 6" of arms 5 and 6, in order to support axle 1 transversely.

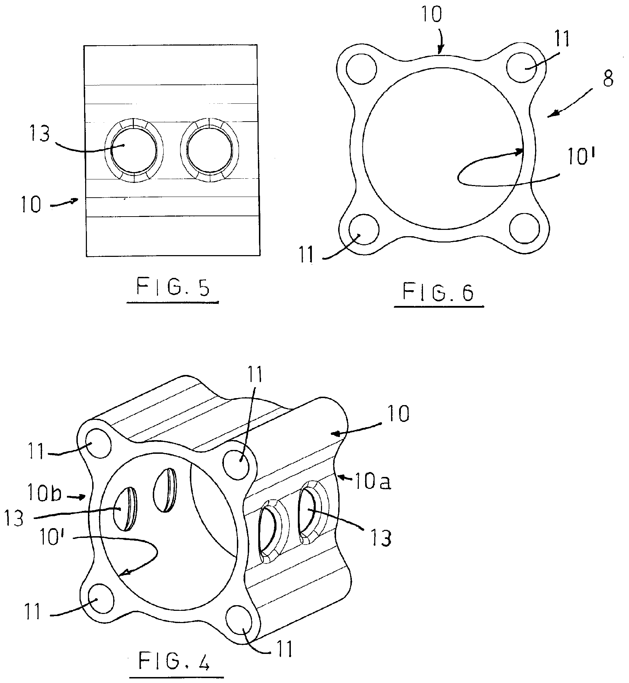

Element 8 is composed of a flange 10, made as a single component as clearly shown in Figures 4, 5 and 6. The axle 1 body, secured and firmly fixed via exclusively thermomechanical keying, is adapted to be inserted in the hollow portion 10', preferably cylindrical, of said element 8.

The flange 10 has a specific shape (quadrangular in the non-limiting example of Figure 6) and features on the front one or more holes 11 (four in the non-limiting example of Figure 6) for the passage of the mentioned bolts 9, and also, in correspondence with the side surfaces 10a and 10b, it features at least one hole or through-cavity 13 adapted to fix axle 1 to flange 10 exclusively using the thermomechanical interference, and therefore not requiring further conventional fastening systems (such as welding, soldering and/or other equivalent methods). Flange 10 is advantageously made by casting of a single piece/component, or alternatively via the assembly of components coupled together via a thermomechanical process, welding or equivalent.

From the foregoing it is clear that flange 10 element 8 defines an effective support for axle 1, and connection for the two arm elements 5 and 6. Furthermore, it allows quick and simple assembly and disassembly operations of individual components of assembly G during the maintenance or in case of replacement of that components, as well as the optimization of the production process.

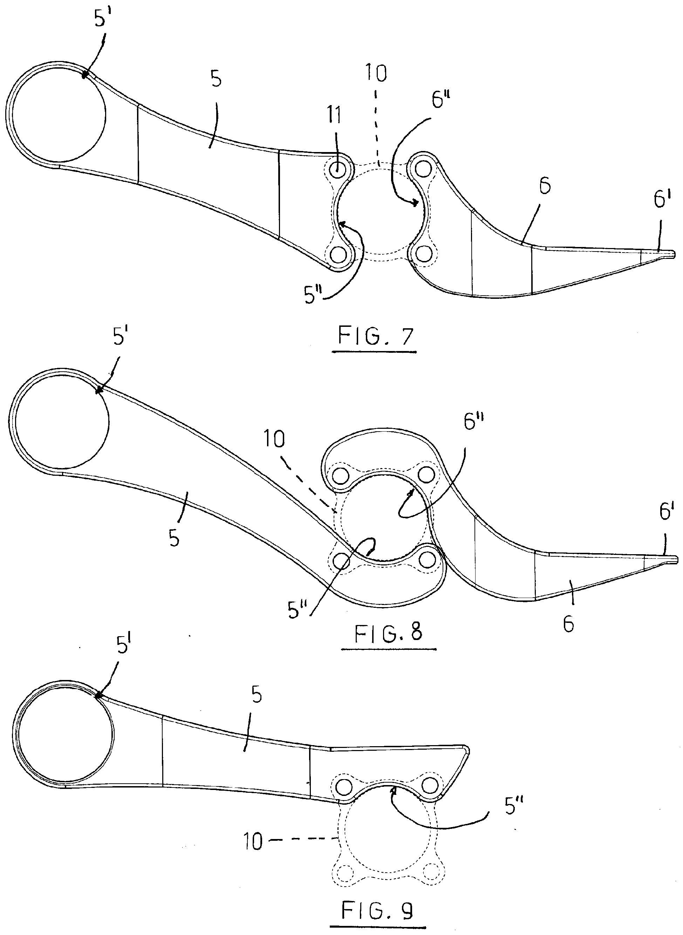

According to the variant shown in Figure 8, end 5" of arm 5 features a curve or a cup shape, in order to be fixed below flange 10, while end 6" of arm 6 also features a curve or a cup shape, in order to be fixed upon flange 10 thereof, in opposition to 5" of arm 5.

According to the variant illustrated in Figure 9, arm 5 has a substantially straight shape with its end 5" adapted to be secured upon flange 10.

In this way, the so described assembly G also provides wide flexibility and adaptability to the different frame configurations of the vehicle frame on which it is mounted, preferably but not limited to industrial vehicles or equivalent.

## Claims

1. Supporting assembly (G) for an axle (1), comprising arm supporting means (4) for supporting said axle (1), said supporting means (4) comprise at least a first arm element (5), **characterized in that** said assembly (G) further comprises single flange connecting means (8,10) adapted to be rigidly engaged only by means of a thermomechanical interference, to said first arm element for supporting said axle (1); and it also comprises a second arm element (6) arranged to be fixed to said single connecting flange means (8,10) for rigidly connecting said first and said second arms (5,6).

2. Supporting assembly according to claim 1, **characterized in that** the said single connecting means (8,10) comprise a single component flange (10) adapted to be secured at respective shaped ends (5", 6") of said first and second arms (5,6), and provided with a cylindrical cavity (10') within which is inserted and keyed said axle (1).

3. Supporting assembly according to any claim 1 to 2, **characterized in that** said single connecting flange means (8,10) comprise single component flange (10) having a hollow determined shape and provided, in correspondence with its lateral surfaces (10a, 10b), with at least one hole (13) or cavity used to fix said axle (1) to said flange (10).

4. Supporting assembly according to one or more of claims 1 to 3, **characterized in that** said first arm (5) is provided with a portion (5') pivoted, through deformable bushing means (B), to a first attachment element (2) for the attachment to the chassis of a vehicle, and said second arm element (6) is provided with a portion (6') adapted to support an elastic means (7) of a suspension group; said elastic means (7) being fixed and acting on a second attachment element (3) to said chassis.

## Patentansprüche

1. Stützanordnung (G) für eine Achse (1), umfassend Armstützmittel (4) zum Stützen der genannten Achse (1), wobei die genannten Stützmittel (4) mindestens ein erstes Armelement (5) umfassen, **dadurch gekennzeichnet, dass** die genannte Anordnung (G) ferner einzelne Flanschverbindungsmittel (8, 10) aufweist, die derart angepasst sind, dass sie nur mittels einer thermomechanischen Interferenz starr mit dem genannten ersten Armelement in Eingriff gebracht werden können, um die genannte Achse (1) zu stützen; wobei sie umfasst auch ein zweites Armelement (6), das derart angeordnet ist, dass es an den genannten einzelnen Flanschverbindungsmitteln (8, 10) befestigt werden kann, um den ersten und den zweiten Arm (5, 6)starr zu verbinden.

2. Stützanordnung nach Anspruch 1, **dadurch gekennzeichnet, dass** die genannten einzelnen Verbindungsmittel (8, 10) einen Einzelkomponentenflansch (10) umfassen, der an den jeweiligen geformten Enden (5", 6") des genannten ersten und zweiten Arms (5, 6) befestigt werden kann und mit einem zylindrischen Hohlraum (10') versehen ist, in den die genannte Achse (1) eingesetzt und verkeilt ist.

3. Stützanordnung nach einem der Ansprüche 1 bis 2, **dadurch gekennzeichnet, dass** die genannten einzelnen Flanschverbindungsmittel (8, 10) einen Einzelkomponentenflansch (10) umfassen, der eine hohle bestimmte Gestalt aufweist und in Übereinstimmung mit ihren Seitenflächen (10a, 10b) mit mindestens einer Bohrung (13) oder Hohlraum versehen ist, die zum Befestigen der genannten Achse (1) an dem genannten Flansch (10) verwendet werden.

4. Stützanordnung nach einem der Ansprüche 1 bis 3, **dadurch gekennzeichnet, dass** der genannte erste Arm (5) mit einem Abschnitt (5') versehen ist, der durch verformbare Buchsen-Mittel (B) an einem ersten Befestigungselement (2) zur Befestigung am Chassis eines Fahrzeuges angelenkt ist, und das genannte zweite Armelement (6) mit einem Abschnitt (6') versehen ist, der geeignet ist, ein elastisches Mittel (7) einer Aufhängungsgruppe zu unterstützen; wobei die genannten elastischen Mittel (7) am Chassis befestigt sind und auf ein zweites Befestigungselement (3) wirken.

## Revendications

1. Ensemble de support (G) pour un essieu (1), comprenant un moyen de support de bras (4) pour supporter ledit essieu (1), ledit moyen de support (4) comprenant au moins un premier élément de bras (5), **caractérisé en ce que** le dit ensemble (G) comprend en outre des moyens de connexion (8, 10) à une seule bride conçus pour être engagés de manière rigide uniquement au moyen d'une interférence thermomécanique, sur ledit premier élément de bras pour supporter ledit essieu (1); et il comprend également un deuxième élément de bras (6) agencé pour être fixé aux dits moyens de connexion (8, 10) à une seule bride, pour une connexion rigide desdits premier et deuxième bras 5, 6).

2. Ensemble de support selon la revendication 1, **caractérisé en ce que** lesdits moyens de connexion (8, 10) à une seule bride comprennent une bride à composant unique (10) apte à être fixée aux extrémités respectives formées (5", 6") desdits premier et deuxième bras (5, 6), et munie d'une cavité cylindrique (10') à l'intérieur de laquelle est inséré et calé ledit essieu (1).

3. Ensemble de support selon l'une quelconque des revendications de 1 à 2, **caractérisé en ce que** lesdits moyens de connexion (8, 10) à une seule bride comprennent une bride à composant unique (10) avec une forme déterminée creuse et munie, en correspondance de ses surfaces latérales (10a, 10b), d'au moins un trou (13) ou une cavité utilisés pour fixer ledit essieu (1) à ladite bride (10).

4. Ensemble de support selon l'une ou plus des revendications de 1 à 3, **caractérisé en ce que** le dit premier bras (5) est pourvu d'une partie (5') pivotée, par l'intermédiaire de bagues déformables (B), sur un premier élément de fixation (2) pour la fixation au châssis d'un véhicule, et ledit deuxième élément de bras (6) est pourvu d'une partie (6') adaptée pour supporter un moyen élastique (7) d'un groupe de suspension; ledit moyen élastique (7) étant fixé et agissant sur un deuxième élément de fixation (3) audit châssis.
